# EUROPEAN PATENT APPLICATION

(11) **EP 4 621 219 A1**
(43) Date of publication of application: **24.09.2025**
(21) Application number: 24165682.6
(22) Date of filing: 22.03.2024
(51) Int. Cl.: F03D 13/10

(54) **DAMPER APPARATUS FOR DAMPING THE ENGAGEMENT BETWEEN PARTS OF A WIND TURBINE AND METHOD OF USING THE SAME**

(71) Applicant: Ørsted Wind Power A/S, 7000 Fredericia Skaerbaek (DK)
(72) Inventor: KASTRUP, Michael, DK-7000 Fredericia (DK); JARAMILLO, Mauricio Almiray, DK-7000 Fredericia (DK)
(74) Representative: Lewis Silkin LLP

(57) **Abstract**

Damper apparatus (6) for damping the engagement between parts (2,3) of a wind turbine (1) during an installation operation in which the parts are connected together. The apparatus (6) comprises an inflatable body (8) configured to be mounted at an interface (7) between the two parts (2,3). A control means (9) comprising at least one valve (10) for controlling the deflation of the inflatable body (8) as the parts (2,3) are moved together during the installation operation for regulating the engagement therebetween.

## Description

The present invention concerns a damper apparatus for damping the engagement between parts of a wind turbine, as well as associated methods. The invention is particularly relevant to the installation operation of installing a wind turbine generator to a nacelle and the replacing of wind turbine generators from wind turbine nacelles. The invention is most particularly relevant to the up-tower installation of a wind turbine generator and to the offshore replacement of wind turbine generators.

Offshore wind has become an increasingly important part of our energy supply infrastructure. As existing offshore wind installations age, there is a need to replace parts, systems and components within them over time. The generator which rotatably connects the blade hub to the nacelle and generates electricity as the hub rotates is one part which often needs replacement, maintenance or refurbishment. In particular, the generator is a complex assembly because it comprises mechanical bearings, fluid lubricant circuits, and electrical systems and is relatively exposed to the marine environment. This means that this part has a relatively limited lifespan. At the same time, generator technology improves, and generator updates may allow for improved efficiency.

There are however significant challenges with removing and replacing generators in offshore wind turbines. Inherently, the marine environment makes operations significantly more complex than they would be onshore and necessitates the use of specialist equipment and vessels. Currently, the most common method of replacing the generator involves detaching the blades, and then lifting the entire nacelle and generator assembly as one piece from the up-tower location down to a vessel. Once on deck, the generator is removed and a replacement is installed using a deck mounted lifting tool. This is preferred because trying to perform such an operation in an up-tower location would be made extremely difficult by the weight of the generator and the movement between the top of the wind turbine tower and the crane. However, lifting the entire nacelle and generator requires a large crane jack-up vessel, as well as significant deck space for accommodating both the nacelle and the generator once it is detached. The specialisation and complexity of the vessels used in these operations mean that they are extremely expensive.

The present invention therefore seeks to address the above issues.

According to a first aspect of the present invention, there is provided a damper apparatus for damping the engagement between parts of a wind turbine during an installation operation in which the parts are connected together, the apparatus comprising: an inflatable body configured to be mounted at an interface between the two parts of the wind turbine; and a control means comprising at least one valve for controlling the deflation of the inflatable body as the parts are moved together during the installation operation for regulating the engagement therebetween.

In this way, the apparatus acts as a cushion between these parts as they are brought together to protect them from damage. Accordingly, the parts can be moved into engagement with one another in a restrained manner, with the deflation of the inflatable body being used to regulate the distance between the parts. Moreover, fluctuations in the engagement forces between the parts during installation, caused for instance by wind, can be absorbed by compression or expansion of the inflatable body, thereby acting to attenuate movement arising from these forces. This may help to align the coupling between the parts and simplify installation operations.

In embodiments, the inflatable body comprises a plurality of inflatable sections.

In embodiments, each of the plurality of inflatable sections are independently deflatable. In this way, sections of the damper may be controlled independently to improve the effectiveness of installation operations. For example, all sections may be inflated initially to absorb larger impact forces on first engagement, with sections then being selectively deflated and withdrawn subsequently as the connection process progresses. Equally, the deflation of sections may be controlled to adjust the angle of engagement.

In embodiments, the at least one valve comprises a plurality of valves for independently controlling the deflation of each of the inflatable sections.

In embodiments, the control means further comprises a controller for controlling at least one valve for controlling the deflation of the inflatable body. In this way, a controller, such as a microprocessor, may be used to control the deflation of the inflatable body or a plurality of inflatable bodies. This may thereby allow coordinated deflation based on, for instance, programmed protocols, sensor inputs or feedback systems.

In embodiments, the controller controls the at least one valve based on an input related to the distance between the parts as they are moved together during the installation operation. In this way, the rate of engagement between the parts may be controlled.

In embodiments, the interface comprises keying formations provided on opposing faces of the parts for mating together when the parts are connected during the installation operation, and wherein the control means controls the deflation of the inflatable body as the parts are moved together such that the speed of mating of the keying formations is restrained. In this way, the relatively fragile keying formations provided at the interface between the parts can be protected.

In embodiments, the inflatable body is configured to avoid obstructing the keying formations when mounted.

In embodiments, the apparatus is for damping the engagement between a wind turbine generator and a nacelle during an up-tower installation operation, wherein the inflatable body is configured to be mounted at an interface between the wind turbine generator and the nacelle. In this way, the complex and relatively fragile parts of the wind turbine generator can be protected from damage during installation.

In embodiments, the apparatus is for damping the engagement between a wind turbine blade hub and a wind turbine blade during an up-tower installation operation, wherein the inflatable body is configured to be mounted at an interface between the wind turbine blade hub and the wind turbine blade. In this way, the wind turbine blade hub and wind turbine blades can be protected from damage during installation.

According to a second aspect, there is provided a method of installing a first wind turbine part by connecting it to a second wind turbine part using the damper apparatus of any preceding claim, the method comprising the steps of: lifting the first wind turbine part to the second wind turbine part; mounting the inflatable body at the interface between the two wind turbine parts; applying a force for moving the two wind turbine parts together, with the inflatable body sandwiched therebetween; and controlling the deflation of the inflatable body to regulate the movement of the two parts together under the force for regulating the engagement therebetween.

In embodiments, the step of lifting the first wind turbine part comprises lifting the first wind turbine part to an up-tower location using a crane for connection to the second wind turbine part provided up-tower.

In embodiments, the first wind turbine part is a wind turbine generator, and the second wind turbine part is a nacelle, and wherein the step of mounting the inflatable body comprises mounting at an interface between the wind turbine generator and the nacelle.

In embodiments, the step of controlling the deflation of the inflatable body comprises controlling the deflation of each of the inflatable sections to adjust the angle of engagement between the first and second wind turbine parts.

In embodiments, the step of controlling the deflation of each of the inflatable sections comprises providing a plurality of valves configured to stagger the rate of release of fluid from each of the inflatable sections.

The method further comprises the step of removing the inflatable body from the interface between the two wind turbine parts once the two wind turbine parts have engaged.

Illustrative embodiments of the present invention will now be described with reference to the accompanying drawings in which:
Figure 1 shows a wind turbine generator being attached to a nacelle of a wind turbine by a wind turbine generator lifting device, without using a damper apparatus;
Figure 2 shows a wind turbine generator being attached to a nacelle of a wind turbine, while using a damper apparatus according to an illustrative embodiment mounted thereon;
Figure 3 shows a schematic illustration of an inflatable section of the damper apparatus shown in Figure 2;
Figure 4 shows keying formations provided on a nacelle of a wind turbine; and
Figure 5 shows an enlarged view of the opposing keying formations of a wind turbine generator and a nacelle of a wind turbine.

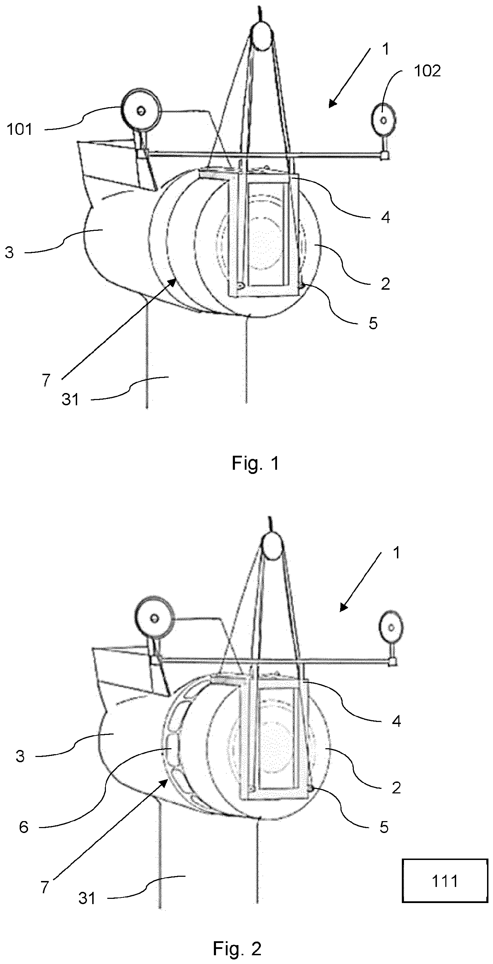

An installation of a generator without using a damper apparatus will first be described as background explanation. In this respect, figure 1 shows a wind turbine generator lifting device 1 being used to install a wind turbine generator 2 to a nacelle 3 of a wind turbine. The generator 2 may be any kind, however, embodiments of the invention are particularly applicable to direct drive generators as they often sit between the nacelle and the rotor hub. Such direct drive generators involve the rotor directly driving a synchronous generator, thereby avoiding the need for a separate gearbox. As such, these units are typically larger than classical gear boxed generators. The lifting device 1 provides a lifting tool for use with a crane and other such hoisting systems to convey a wind turbine generator 2. The lifting device 1 has a frame 4 which forms a yoke or carrier for supporting the generator 2 as it is conveyed. The frame 4 is provided with tether points 5, which form a crane coupling, and are used for primarily bearing the weight of the generator 2 when it is suspended in an upright orientation as it is conveyed from a down-tower location to an up-tower location, or vice versa. For instance, the down-tower location may be on the deck of a nearby vessel or in an area surrounding the base of the wind turbine, and the up-tower location may be an area at or adjacent to the top of the wind turbine tower 31 where the nacelle 3 is mounted. As shown in Figure 1, the device 1 further comprises a yaw control system 101 that is releasably coupled to the frame 4. The yaw control system 101 functions as a controllable drone with one or more propellers 102 actuatable for yawing the frame 4 in the air about the hoisting line as it is hoisted by the crane.

Once the generator 2 has been hoisted to the up-tower location, the wind turbine generator 2 is brought into contact and then connected to the nacelle 3 during an installation operation. However, during this operation, there is a risk of damage to the nacelle 3 or generator 2 as the parts are brought into contact. For example, changes in wind direction and speed at the up-tower location make it difficult to maintain precise control over the position and orientation of the lifting device 1 during the installation operation. Moreover, the nacelle 3 may also sway due to these changes in wind. As such, these relative movements between the parts means it is often difficult to bring the generator 2 into contact with the nacelle 3 without these parts impacting one another with undue force or inadvertently separating and colliding back. As the interface between these parts typically comprises a keyed coupling used to align and connect the parts, these impacts risk damage to the relatively fragile connecting formations, as well as the electronic and fluid systems and ports that often surround or are located at the interface surfaces. Repairing such damage can be difficult and expensive, may necessitate repeating the installation operation, which exacerbates the increased costs.

To address the above issue, a damper is provided. In this respect, Figure 2 shows a similar scenario to Figure 1 with a wind turbine generator 2 being attached to a nacelle 3, but in this case a damper 6 according to a first embodiment is mounted at the interface between the nacelle 3 and the generator 2. The damper 6 is formed from one or more of inflatable sections, as will be described in further detail below.

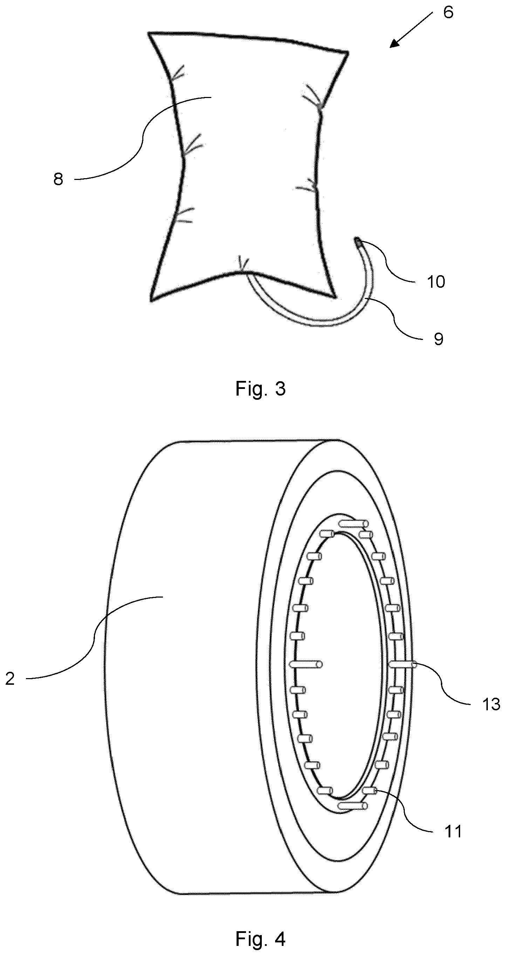

In this connection, Figure 3 shows one section of the damper 6 shown in Figure 2. The section comprises an inflatable body 8, which is formed of a flexible, air-tight sheet material. Suitable materials include a fibre-reinforced fabric or other puncture proof material. The inflatable body 8 comprises an internal cavity that can be inflated with a gas or a liquid through a tube 9 by an inflation means. The damper 6 is inflated by this fluid filling its internal cavity. The valve 10 provided in the tube 9 is used as a control means for retaining fluid in the internal cavity and is actuatable for releasing the fluid to deflate the body 8. When the bag 8 is deflated, the gas or liquid flows out of the valve 10, driven by the forces applied to the exterior of the body. Once deflated, the body 8 adopts a flattened shape, thereby occupying less space and allowing it to be more easily removed from the interface between the parts. While Figure 3 shows the inflatable body 8 having a rectangular shape, in other embodiments the body 8 can have other shapes, such as a curved tube or circular shape. The shape of these sections 8 means that the damper 6 can be configured specifically for the interface 7 between the parts that it is to be mounted thereto. Accordingly, depending on the configuration of the wind turbine parts being installed, the damper 6 can be formed into various complementary shapes suitable for its mounting at the interface 7. For example, the damper 6 may be formed of regularly spaced cavities or pockets. Alternatively, the cavities may be irregularly spaced. The damper 6 may comprise a single a cavity separated by strips, to form discrete fluid cavities. The damper 6 may comprise one or more discrete cavities. The cavities may be in fluid communication with one another.

As discussed above, during installation operations, movement of the crane, the lifting device 4 and the wind turbine tower 31 could cause the generator 2 part of the wind turbine to inadvertently collide into the nacelle 3 with an excessive force as these parts are connected. In this connection, the damper 6 acts as a cushion or brace between these parts as they are brought together. Specifically, turning back to Figure 2, the generator 2 is brought into contact with the damper 6 mounted onto the interface surface of the nacelle 3, and it is maneuvered by the crane to apply an engagement force against the inflatable bodies 8. The bodies 8 ensure that the generator 2 does not collide with the nacelle directly, as the damper 6 is positioned at the interface 7 between these parts. Even when the engagement force fluctuates as the parts move relative to one another in the wind, this is absorbed by compression or expansion of the inflatable bodies 8 forming the damper 6. This attenuates movement arising from these forces, thereby preventing damage to the parts.

After the parts of the wind turbine are brought together, the parts can be aligned and subsequently engaged to connect the two parts together. The damper 6 thereby enables the parts to be aligned and engaged without causing damage to either part.

During the engagement process, the valves 10 may be controlled to deflate the respective inflatable bodies 8, with the rate of fluid released being regulated by the flow rate through each of the valves 10. As the engagement force is maintained between the generator 2 and the nacelle 3, the parts move together as the inflatable bodies 8 deflate. The inflatable bodies 8 thereby reduce in size, with the parts being brought closer together in a controlled manner. During this phase, alignment between the parts can be monitored to ensure that the coupling between the parts are aligned. The inflatable bodies 8 may be inflated during the process, to adjust the position of the generator 2 with respect to the nacelle 3, for example to adjust the alignment between the components. For example, one or more of the inflatable bodies 8 may be wholly or partially deflated, while one or more other of the inflatable bodies 8 may be wholly or partially inflated, thereby adjusting the pitch and yaw of the generator 2 with respect to the nacelle 3.

In the above example, simple mechanical valves 10 are used as the control means to regulate deflation, and/or inflation, of the inflatable bodies and hence the rate of engagement between the parts by controlling the distance therebetween. For example, pressure relief valves may be used which are configured to deflate if the pressure within the internal cavity of the inflatable body 8 exceeds a predetermined threshold. Accordingly, by controlling the engagement force, for instance by adjusting the position of the crane to apply more weight through the generator 2, regulated deflation can be effected. As such, the inflatable body 8 can be configured to automatically deflate, albeit in a restrained and predicable way during the installation operation.

In embodiments, a controller 111 may be provided as part of the control means to control the valves 10. For example, in one arrangement, the controller 111 may receive an input from a pressure sensor measuring the internal cavity pressure and process these measurements to control the engagement speed of the parts by releasing the valves to reduce the internal pressure in a controlled manner.

In one embodiment, the plurality of inflatable sections may be provided as an interconnected array with the sections being in fluid communication with each other. As such, a single valve can be used to deflate all the inflatable sections.

In another embodiment, as shown in Figure 2, each of the plurality of inflatable sections may be separate and may be independently deflated by respective valves 10. A controller 111 may then be used to adjust the rate of deflation of each section. This may advantageously allow the pitch and yaw of the generator 2 to be adjusted as it is moved into engagement with the nacelle 3. This could, for instance, allow the angle of engagement to be adjusted so that one side of an interface is aligned first before tilting the remaining parts of the interface into position to complete the connection operation.

Referring to Figure 2, the plurality of inflatable bodies 8 may be arranged circumferentially at the interface 7 between the parts of the wind turbine. As such, the plurality of inflatable bodies 8 can form a ring around the periphery of the interface 7. The plurality of inflatable bodies 8 may be arranged wholly, or partially circumferentially at the interface 7. That is, the inflatable bodies 8 may form a partial or broken ring around the periphery of the interface 7.

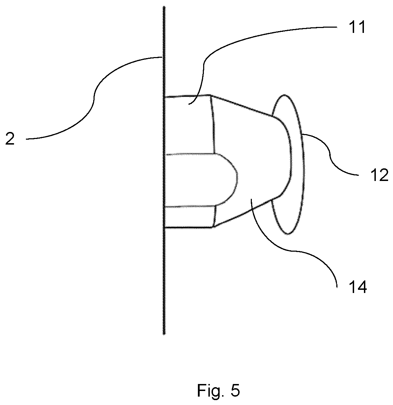

As shown in Figures 4 and 5, the interface 7 between the parts of the wind turbine typically comprises keying formations 11 for mating with corresponding keying formations 12 on the respective other part being connected thereto. For example, the generator 2 may comprise keying formations in the form of pins 11 and the nacelle 3 may comprise the corresponding keying formations in the form of apertures 12, or vice versa. In preferred embodiments, the damper 6 is configured such that it is does not interfere with the keying formations 11, 12 when mounted at the interface 7. For example, in the above illustrative embodiment, the inflatable bodies 8 form a circular array, with the width of the bodies 8 being sized to locate between the pins 11 and the outer circumference of the generator 2. As such, the damper 6 does not interfere with the keying formations 11 mating with the corresponding keying formations 12 when the parts are brought into engagement.

In one embodiment, the controller 111 may be configured to control deflation based on an input related to the distance between the parts. For example, the controller 111 may receive an input from a sensor, such as a proximity sensor or laser sensor, for measuring the distance between the interface surfaces. From these measurements, the controller 111 can regulate the valves 10 to deflate the inflatable bodies 8. As such, the rate of deflation of the damper 6 can be controlled through feedback.

Once the damper 6 has sufficiently deflated to bring the parts of the wind turbine sufficiently together to be connected, the damper 6 may be removed. For example, the damper 6 may include a removal chord to allow it to be withdrawn from the interface. The damper 6 may be configured to avoid obstructing the keying formations 11, 12 when mounted. That is, the inflatable bodies 8 may be arranged such that they do not interfere with the keying formations 11, 12, when inflated or deflated. In some scenarios, it is envisaged that, as the damper 6 forms a flat surface when deflated, the damper 6 may remain in the interface 7 between the parts to be used at a later stage for separating the two parts by reinflation. This may, for instance, be possible where a recess is provided in the interface into which the inflatable bodies are seated. Likewise, the damper 6 may also be used when the two parts are separated from each other.

It will be understood that the embodiment illustrated above show applications of the invention only for the purposes of illustration. In practice the invention may be applied to many different configurations, the detailed embodiments being straightforward for those skilled in the art to implement.

For example, while the above illustrative embodiment has been described as providing a damping apparatus 6 mounted between the nacelle and the generator 2, it will be understood that the damper can be mounted between other connectable parts of the wind turbine during their installation. For example, the damper may be mounted between the generator and the wind turbine blade hub as the blade hub is installed, or between blades and the blade hub. In these scenarios, the inflatable bodies forming the damper can be configured to be mounted at an interface between the parts for similarly damping the engagement between them as they are connected together. As such, the inflatable bodies can be mounted on or between the opposing surfaces of the parts as they are brought together for protecting these parts.

## Claims

1. A damper apparatus for damping the engagement between parts of a wind turbine during an installation operation in which the parts are connected together, the apparatus comprising:
an inflatable body configured to be mounted at an interface between the two parts of the wind turbine; and
a control means comprising at least one valve for controlling the deflation of the inflatable body as the parts are moved together during the installation operation for regulating the engagement therebetween.

2. A damper apparatus according to claim 1, wherein the inflatable body comprises a plurality of inflatable sections.

3. A damper apparatus according to claim 2, wherein each of the plurality of inflatable sections are independently deflatable.

4. A damper apparatus according to claim 3, wherein the at least one valve comprises a plurality of valves for independently controlling the deflation of each of the inflatable sections.

5. A damper apparatus according to any preceding claim, wherein the control means further comprises a controller for controlling at least one valve for controlling the deflation of the inflatable body.

6. A damper apparatus according to claim 5, wherein the controller controls the at least one valve based on an input related to the distance between the parts as they are moved together during the installation operation.

7. A damper apparatus according to any preceding claim, wherein the interface comprises keying formations provided on opposing faces of the parts for mating together when the parts are connected during the installation operation, and wherein the control means controls the deflation of the inflatable body as the parts are moved together such that the speed of mating of the keying formations is restrained.

8. A damper apparatus according to claim 7, wherein the inflatable body is configured to avoid obstructing the keying formations when mounted.

9. A damper apparatus according to any preceding claim, wherein the apparatus is for damping the engagement between a wind turbine generator and a nacelle during an up-tower installation operation, wherein the inflatable body is configured to be mounted at an interface between the wind turbine generator and the nacelle.

10. A method of installing a first wind turbine part by connecting it to a second wind turbine part using the damper apparatus of any preceding claim, the method comprising the steps of:
lifting the first wind turbine part to the second wind turbine part;
mounting the inflatable body at the interface between the two wind turbine parts;
applying a force for moving the two wind turbine parts together, with the inflatable body sandwiched therebetween; and
controlling the deflation of the inflatable body to regulate the movement of the two parts together under the force for regulating the engagement therebetween.

11. A method according to claim 10, wherein the step of lifting the first wind turbine part comprises lifting the first wind turbine part to an up-tower location using a crane for connection to the second wind turbine part provided up-tower.

12. A method according to claim 10 or 11, wherein the first wind turbine part is a wind turbine generator, and the second wind turbine part is a nacelle, and
wherein the step of mounting the inflatable body comprises mounting at an interface between the wind turbine generator and the nacelle.

13. A method according to any of claims 10 to 12, when using the damper apparatus of claim 4 or dependent from claim 4, wherein the step of controlling the deflation of the inflatable body comprises controlling the deflation of each of the inflatable sections to adjust the angle of engagement between the first and second wind turbine parts.

14. A method according to claim 13, wherein the step of controlling the deflation of each of the inflatable sections comprises providing a plurality of valves configured to stagger the rate of release of fluid from each of the inflatable sections.

15. A method according to any of claims 10 to 14, further comprising the step of:
removing the inflatable body from the interface between the two wind turbine parts once the two wind turbine parts have engaged.
